# EUROPEAN PATENT SPECIFICATION

(11) **EP 0 841 374 B1**
(45) Date of publication and mention of the grant of the patent: **22.12.2004**
(21) Application number: 97119402.2
(22) Date of filing: 06.11.1997
(51) Int. Cl.: C08L 23/28, C08K 5/372

(54) **Molded rubber part suitable for use in contact with medical solution**
Gummiformkörper geeignet zur Anwendung im Kontakt mit medizinischen Lösungen
Objets moulés en caoutchouc à mettre en contact avec des solutions médicales

(30) Priority: 07.11.1996 JP 30988496
(43) Date of publication of application: 13.05.1998
(73) Proprietor: DAIKYO SEIKO, LTD., Tokyo (JP)
(72) Inventor: Sudo, Morihiro, Sumida-ku, Tokyo (JP); Muraki, Tomoyasu, Sumida-ku, Tokyo (JP); Kawachi, Yasushi, Sumida-ku, Tokyo (JP)
(74) Representative: Wächtershäuser, Günter, Prof. Dr.

(56) References cited:
- US-A- 5 082 875
- DATABASE WPI Section Ch, Week 8536 Derwent Publications Ltd., London, GB; Class A17, AN 85-221389 XP002098119 & JP 60 144346 A (TORITSU KOGYO KK) , 30 July 1985
- DATABASE WPI Section Ch, Week 7722 Derwent Publications Ltd., London, GB; Class A17, AN 77-39022Y XP002098120 & JP 52 050345 A (DAIKYO GUM SEIKO KK) , 22 April 1977

## Description

### BACKGROUND OF THE INVENTION

### a) Field of the Invention

This invention relates to a molded rubber part suitable for use in contact with a medical solution, and more specifically to a rubber closure for a drug container (hereinafter simply called a "container") or a rubber stopper for a drug injector (for example, a syringe) (hereinafter simply called a "syringe"), said rubber closure or stopper being made of a vulcanized halogenated butyl rubber. Specifically, the present invention is concerned with a rubber closure for a container, said rubber closure being excellent in needle piercing readiness, having been improved in the leakage of a medical solution after a needle has been withdrawn, and being free from dissolution of zinc into a medical solution, or with a rubber stopper for a syringe, said rubber stopper being free from dissolution of zinc into the medical solution.

### b) Description of the Related Art

US-A 5 082 875 discloses a sanitary rubber article. JP 52 050 345 discloses a rubber prepared by vulcanizing butyl chloride rubber in the presence of a 2-substituted-4,6-olimercapto-s-triazine derivative.

Butyl rubber and halogenated butyl rubber added with a halogen such as chlorine or bromine are excellent in gas permeation resistance. Making use of this property, they have been used as materials for rubber closures or plugs (which may hereinafter be called simply "rubber plugs") for containers to date.

Butyl rubber is a rubber available by copolymerizing isobutylene with a small proportion of isoprene (for example, about 1 to 3 wt.% or so based on the butyl rubber). Compared with diene rubber such as natural rubber or polyisoprene rubber, butyl rubber contains double bonds at a very low concentration, thereby making it difficult to conduct its vulcanization sufficiently.

On the other hand, halogenated butyl rubber contains one halogen atom and approximately one double bond in each isoprene unit of the rubber [-CH=C(CH₃)-CH(X)-CH₂-; X represents a halogen atom]. Vulcanizetion (crosslinking) is therefore feasible using double bonds and halogen atoms, leading to an advantage that halogenated butyl rubber permits more sufficient vulcanization than butyl rubber.

For vulcanization making use of halogen atoms in halogenated butyl rubber, zinc white (zinc oxide) is generally used. To perform concurrent vulcanization making use of double bonds, sulfur or a thiuram compound such as tetramethylthiuram disulfide is also used in combination with a dithiocarbamate-type vulcanization promoter such as zinc diethyldithiocarbamate. Further, an amine such as an amine-type silane coupling agent is also used to vulcanize halogenated butyl rubber by making use of halogen atoms.

Use of these vulcanization systems makes it possible to vulcanize halogenated butyl rubber more sufficiently than butyl rubber. The above-described vulcanization systems are however accompanied by a problem that zinc is dissolved into medical solutions from rubber plugs for containers, said rubber plugs being made of halogenated butyl rubber making use of the above-described vulcanization systems, because these vulcanization systems all use zinc white in amounts not greater than 5 parts by weight per 100 parts by weight of the rubber. In addition, the vulcanization of halogenated butyl rubber is still insufficient compared with a sulfur-vulcanized product of diene rubber such as natural rubber although halogenated butyl rubber can be vulcanized more sufficiently than butyl rubber. Halogenated butyl rubber therefore another problem that its vulcanized product becomes tacky on a surface thereof.

Accordingly, use of the above-described vulcanized product of halogenated butyl rubber for a rubber plug for a container may develop such problems that large resistance may be encountered upon piercing a needle of a syringe therethrough and a medical solution may leak out after the needle is withdrawn. In the case of a rubber stopper for a syringe such as one attached to a free end of a plunger of the syringe, on the other hand, the rubber stopper is brought into direct contact with a medical solution. It is therefore necessary that nothing will be dissolved or extracted out from the rubber stopper into the medical solution even when they are kept in contact for a long time. The conventional art however involves the troublesome dissolution of zinc from the rubber stopper into the medical solution as described above. The rubber stopper is also required to provide sufficient air tightness. However, a problem often arises in connection with the air tightness of the rubber stopper because the vulcanization of halogenated butyl rubber by the above-described vulcanization systems is insufficient.

On the other hand, non-toxic rubber obtained by vulcanizing brominated butyl rubber with a 2-substituted-4,6-mercapto-s-triazine without using zinc white was proposed in Japanese Patent Application Laid-Open (Kokai) No. SHO 52-50345. However, the vulcanization is also insufficient in this case, resulting in occurrence of problems similar to those mentioned above.

### SUMMARY OF THE INVENTION

With the foregoing circumstances in view, the present invention has an object thereof the provision of a rubber closure or plug for a container or a rubber stopper for a syringe, which is free from surface tackiness (tack), is provided with firmness, meets standard values of extractive (zinc) and other standard values specified in the Japanese Pharmacopoeia, the United States Pharmacopoeia and the Pharmacopoeias of various European countries, and has been lessened or reduced, for example, in the resistance upon piecing a needle therethrough and the leakage of a medical solution after the needle is withdrawn.

The present inventors were interested in the disclosure of Japanese Patent Application Laid-Open (Kokai) No. SHO 60-144346 to the effect that combined use of fine particles of ultra-high-molecular-weight polyethylene (PE) with halogenated butyl rubber can overcome the problem of dissolution of an inorganic reinforcing filler, which has conventionally been filled in butyl rubber, into a medical solution from a rubber plug for a container and can also reduce resistance to needle piercing. This publication also discloses a rubber plug for a container, which has been obtained by vulcanizing chlorinated butyl rubber with zinc white and zinc dithiocarbamate, and a rubber plug for a container, which has been obtained by vulcanizing brominated butyl rubber with zinc white and a sulfur-base vulcanization system or the like. The above publication however makes no mention about a rubber plug for a container, which has been obtained by vulcanizing chlorinated butyl rubber or brominated butyl rubber with a vulcanization system other than the above vulcanization systems.

Incidentally, rubber plugs for containers, which have been obtained by conducting vulcanization with the vulcanization systems disclosed in the above publication, cannot avoid the dissolution of zinc and further, cannot fully prevent the leakage of a medical solution after withdrawal of a needle although this leakage problem has been lessened or reduced compared with the conventional rubber plugs.

With a view to overcoming the above-described problems which arise from the use of ultra-high-molecular-weight PE as a reinforcing filler for halogenated butyl rubber, the present inventors have proceeded with an investigation on various vulcanization systems. As a result, it has been found that the above-described object of the present invention can be achieved by conducting the vulcanization of halogenated butyl rubber with a triazinethiol compound as a vulcanizer in the absence of any zinc compound while using halogen atoms in the halogenated butyl rubber or by conducting the vulcanization with an organic peroxide. Based on this finding, the present inventors have led to the completion of the present invention.

The above-described object has now been achieved by the present invention. In one aspect of the present invention, there is thus provided a molded rubber part suitable for use in contact with a medical solution, wherein said molded rubber part has been obtained by molding and vulcanizing a halogenated butyl rubber, which contains fine powder of ultra-high-molecular-weight polyethylene added therein in a proportion of from 5 to 70 parts by weight per 100 parts by weight of the halogenated butyl rubber, in the absence of any zinc compound while using at least one 2-substituted-4,6-dithiol-s-triazine derivative or an organic peroxide.

According to the present invention, it is possible to provide rubber closures for use with containers for aqueous infusion or containers for various solid or liquid drug preparations as well as rubber stoppers for drug injectors such as syringes. These rubber closures and stoppers can meet the standard values of extractive (zinc) and other standard values specified in the Japanese Pharmacopoeia, the United States Pharmacopoeia and the Pharmacopoeias of various European countries, and are free from surface tackiness. Further, the rubber closures permit easy piercing of needles and are lessened or reduced in the leakage of medical solutions after withdrawal of the needles, and the rubber stoppers are free from dissolution or extraction even when kept in contact with medical solutions for a long time.

Additionally, the present invention also relates to the use of the molded rubber parts as a rubber closure for a drug container or as a rubber stopper for a drug injector. Furthermore, the present invention provides a process for the preparation of the molded rubber parts.

### DETAILED DESCRIPTION OF THE INVENTION AND PREFERRED EMBODIMENTS

The present invention will hereinafter be described in further detail by setting forth its embodiments.

The halogenated butyl rubber useful in the practice of the present invention is available by adding a halogen such as chlorine or bromine to a copolymer rubber of isobutylene and isoprene (the content of isoprene in the copolymer generally ranges from 1 to 5 wt.% or so). Conventionally-known halogenated butyl rubbers are all usable in the present invention.

The 2-substituted-4,6-dithiol-s-triazine derivative (which may hereinafter be called a "triazine derivative) for use in the practice of the present invention is a compound represented by the following formula:

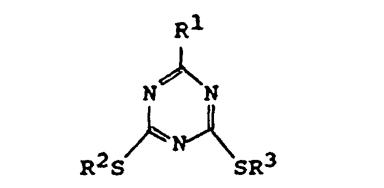

In the above formula, R¹ represents OR⁴, SR₄ or NR⁵R⁶, in which R⁴, R⁵ and R⁶ may be the same or different and individually represent a hydrogen atom, an alkyl group (C₁ to C₁₈ or so), an alkenyl group (C₁ to C₁₈ or so), an arylalkyl group such as a phenyl or benzyl group, or an alkylaryl or cycloalkyl group (C₅ to C₈ or so) such as a tolyl or xylyl group. Further, R² and R³ may be the same or different and individually represent a hydrogen atom, an amino group (secondary to tertiary), a quaternary ammonium group, an alkali metal atom such as a sodium or potassium atom, or a 1/2 alkaline earth metal atom such as a 1/2 calcium or barium atom.

No particular limitation is imposed on the triazine derivative in the present invention, but its typical examples can include 2,4,6-trithiol-s-triazine (trithiocyanuric acid), 2-butylamino-4,6-dithiol-s-triazine, 2-ethylamino-4,6-dithiol-s-triazine· dioctylamine and 2-butyl-4,6-dithiol-s-triazine· ditriethyl ammonium. For ready availability, 2-butylamino-4,6-dithiol-s-triazine is preferred.

No particular limitation is imposed on the proportion of the triazine derivative. By a preliminary experiment, a proportion which can impart necessary strength characteristics or the like to the molded rubber part of the present invention and can meet standard values of various standard methods of analysis for hygienic chemicals is confirmed, and the triazine derivative is used in the thus-confirmed proportion. In general, however, the triazine derivative can be used in a proportion of from 0.1 to 10 parts by weight per 100 parts by weight of the halogenated butyl rubber. A proportion smaller than 0.1 part by weight will lead to insufficient vulcanization of the halogenated butyl rubber, whereas use of the triazine derivative even in a proportion greater than 10 parts by weight will not result in any further progress of the vulcanization of the halogenated butyl rubber so that such an excessively large proportion is uneconomical. The preferable proportion ranges from 0.5 to 5 parts by weight.

No particular limitation is imposed on the organic peroxide for use in the practice of the present invention, insofar as it can vulcanize the halogenated butyl rubber. Illustrative are 1,3-(t-butylperoxyisopropyl)benzene, 2,5-dimethyl-2,5-di(t-butylperoxy)-hexane, 2,5-dimethyl-2,5-di(t-butylperoxy)hexane-3,1,1-di(t-butylperoxy-3,3,5-trimethylcyclohexane, diisobutyl peroxide and n-butyl 4,4-bis(5-butylperoxy)valerate.

Along with the above-described organic peroxide, a vulcanization (crosslinking) aid can also be used as needed. Examples of the vulcanization aid can include polyfunctional monomers such as triallyl isocyanurate, trimethylolpropane trimethacrylate, allyl methacrylate, diallyl phthalate, ethylene glycol dimethacrylate, 1,3-butylene glycol dimethacrylate and bismaleimide; and 1,2-polybutadiene.

No particular limitations are imposed on the proportions of the organic peroxide and vulcanization aid. By preliminary experiments, proportions which can impart necessary strength characteristics or the like to the molded rubber part of the present invention and can meet standard values of various standard methods of analysis for hygienic chemicals are confirmed, and the organic peroxide and vulcanization aid are used in the thus-confirmed proportions, respectively. In general, however, the organic peroxide can be used in a proportion of from 0.1 to 5 parts by weight or so per 100 parts by weight of the halogenated butyl rubber, and the vulcanization aid can be used in a proportion range of from 5 to 10 parts by weight or so per 100 parts by weight of the halogenated butyl rubber.

A characteristic feature of the present invention reside in the vulcanization of the halogenated butyl rubber with the organic peroxide or in the vulcanization of the halogenated butyl rubber with the triazine derivative while making use of its halogen atoms, in other words, in that vulcanization with zinc white or zinc white and a vulcanization promoter such as zinc dithiocarbamate, which makes use of double bonds, is not performed.

Accordingly, inorganic zinc compounds such as zinc white and vulcanization promoters, e.g., the zinc salts of various organic compounds and other zinc compounds including organic zinc compounds are not used at all in the present invention.

Upon production of the molded rubber part according to the present invention by using the triazine derivative as a vulcanizer, the oxide or carbonate of magnesium, calcium or the like can be used, together with the triazine compound, in a proportion of from 0.1 to 10 wt.% or so per 100 parts by weight of the rubber as a regulator for the vulcanization reaction and also as a receptor (acid scavenger) for a hydrogen halide to be formed.

Another feature of the present invention resides in the use of the fine powder of ultra-high-molecular-weight polyethylene (PE) as a reinforcing filler for the halogenated butyl rubber in a proportion as defined by claim 1.

Ultra-high-molecular-weight PE is a PE having an ultra high molecular weight of about 1,000,000 or higher in terms of viscosity-average molecular weight. Similarly to conventional PEs such as LLDPE, LDPE and HDPE, it can be produced by polymerization with a Ziegler catalyst. Incidentally, the viscosity-average molecular weight of general PE ranges from about 20,000 to about 100,000. The fine powder of ultra-high-molecular-weight PE is available by converting the ultra-high-molecular-weight PE into fine powder by a desired method such as mechanical grinding or addition of a poor solvent to a solution of the PE (which is soluble in hot carbon tetrachloride, Trichlene or the like) for precipitation. In general, fine powder passed through a 100-mesh sieve, preferably a 200-mesh sieve, more preferably a 300-mesh sieve is used.

Owing to the use of the fine powder of ultra-high-molecular-weight PE, the problem that a vulcanized product (molded rubber part) becomes tacky due to insufficient vulcanization of halogenated butyl rubber has been overcome. The proportion of the fine powder of ultra-high-molecular-weight PE to be used differs within a range of from 5 to 10 parts by weight per 100 parts by weight of said halogenated butyl rubber, depending on whether the molded rubber part is a rubber closure for a container or a rubber stopper for a syringe. In the case of a rubber closure for a container, the fine powder can be used in a proportion of from 5 to 25 parts by weight per 100 parts by weight of the halogenated butyl rubber. In the case of a rubber stopper for a syringe, on the other hand, the fine powder can be used in a proportion of from 20 to 70 parts by weight per 100 parts by weight of the rubber. Proportions smaller than the lower limits of the respective ranges cannot impart firmness to the rubber closure and the rubber stopper as much as needed, so that greater resistance is encountered upon piercing a needle in the case of the rubber closure for the container and greater sliding resistance is produced in a syringe in the case of the rubber stopper for the syringe. On the other hand, proportions greater than the upper limits of the respective ranges render the rubber closure and the rubber stopper excessively firm so that the elasticity, elongation and the like of the rubber closure and rubber stopper are reduced. Proportions outside the above ranges are hence not essential. The preferable proportion of the fine powder of ultra-high-molecular-weight PE is from 5 to 20 parts by weight per 100 parts by weight of the halogenated butyl rubber in the case of a rubber closure for a container and is from 20 to 60 parts by weight per 100 parts by weight of the halogenated butyl rubber in the case of a rubber stopper for a container.

In the present invention, conventionally-used, inorganic reinforcing fillers such as silica, clays and magnesium silicate can be used either singly or in combination in the halogenated butyl rubber to an extent not impairing the advantageous effects of the invention. The preferable proportion of such a reinforcing filler (when two or more reinforcing fillers are used, the preferable total proportion thereof) is not greater than 40 parts by weight per 100 parts by weight of the halogenated butyl rubber.

The above-described individual components are kneaded in a conventional mixer to prepare a rubber compound. By compression molding, injection molding or the like, the rubber compound is then formed into a molded rubber part of a predetermined shape, followed by vulcanization. Needless to say, no limitation whatsoever is imposed on the production process of the molded rubber part in the present invention. Further, the molded rubber part according to the present invention can be coated or otherwise covered with a fluorinated resin, a silicone resin or the like at a desired surface thereof or the entire surfaces thereof as needed.

In the present invention, owing to the use of the fine powder of ultra-high-molecular-weight PE and the above-described vulcanization system of the triazine derivative or organic peroxide, the surface of the vulcanized product (molded rubber part) can be prevented from becoming tacky despite the degree of vulcanization of the halogenated butyl rubber is not sufficiently high. Further, a rubber closure for a container and a rubber stopper for a syringe are imparted with the excellent advantageous effects unavailable from the conventional art. Specifically, the rubber closure produces only low resistance upon piercing a needle therethrough and is free from leakage of a medical solution after withdrawal of the needle and is also absolutely free from dissolution of zinc. The rubber stopper causes absolutely no dissolution of zinc.

The present invention will next be described more specifically by setting forth Examples and Comparative Examples, in which all the designations of "part" or "parts" and "%" are by weight basis unless otherwise specifically indicated.

### Examples 1-2 & Comparative Example 1

Provided for use In each of the Examples and Comparative Example were a halogenated butyl rubber (chlorinated butyl rubber; "HT-1066", trade name; product of Japan Butyl Co., Ltd.), fine powder of ultra-high-molecular-weight PE passed through a 200-mesh sieve ("MIPELON", trade mark; product of Mitsui Petrochemical Industries, Ltd.), and as a vulcanizer, 2-dibutylamino-4,6-dithiol-s-triazine ("ZINSNET-DB", trade name; product of Sankyo Kasei Co., Ltd.) or as an organic peroxide, 2,5-dimethyl-2,5-di(t-butylperoxy)-hexane ("Perhexa 2,5B", trade name; product of NOF Corporation). In accordance with the corresponding formulation shown below in Table 1, the halogenated butyl rubber and the ultra-high-molecular-weight PE were kneaded at a temperature of from 80 to 120°C in a pressure kneader and the remaining additives were then mixed on a roll mill, whereby a rubber compound for rubber closures was obtained.

The rubber compounds so obtained were separately molded by compression molding and vulcanized under their corresponding conditions shown below in Table 1, so that rubber closures were formed. None of the rubber closures exhibited surface tackiness. The rubber compounds were also separately vulcanized on a press into 2-mm thick sheets under their corresponding conditions, which were the same as the above-mentioned conditions, respectively. Strength characteristics of the sheets were measured following the procedures of JIS K6301.

Concerning the thus-obtained rubber closures, various tests were conducted by the following testing methods. The results of these tests are presented below in Tables 1 to 4.

### (1) Dissolution test

The testing method for rubber closure for aqueous infusion specified in the Japanese Pharmacopoeia (the 13th edition): A sample is heated at 121°C for 1 hour in 10 times of its volume of water. Test results are presented in Table 2.

### (2) Special tests

### (i) Coring resistance

Following British Standard 3263 (1960), a water-filled bottle is fitted with a rubber closure and the rubber closure is tightened by an aluminum cap. The aluminum cap is then removed at a portion thereof, which corresponds to a needle piecing portion of a central part of the rubber closure. A standard testing needle 22G (manufacture by TOP Corporation) is pierced 100 times. After the bottle is shaken several times, water is filtered and rubber pieces on filter paper are counted.

### (ii) Needle piercing test

Following British Standard 3263 (1960), force (g) upon causing the above-described standard testing needle to pass through a rubber closure at a speed of 20 cm/min is measured by an automatic strain-stress gauge.

### (iii) Leakage of solution

A 500-mℓ bottle is filled with water and is fitted with a rubber closure. After the rubber closure is tightened by an aluminum cap, the bottle with the water filled therein is heated at 121°C for 30 minutes and is then cooled. The rubber closure is pierced by the above-described standard needle, and the bottle is left over for 1 hour in a position held upside down. An air inlet needle is then pierced. At a time point that 400 mℓ of water have been withdrawn, the standard needle is withdrawn and an amount of water flowed out after the withdrawal of the needle is measured. The results of the above tests are presented below in Table 3.

**Table 1**

| Formulation | Example 1 | Example 2 | Comp. Ex. 1 |
|---|---|---|---|
| Halogenated butyl rubber | 100 | 100 | 100 |
| Ultra-high-molecular-weight PE | 10 | 10 | 10 |
| Silica | 7.5 | 7.5 | 7.5 |
| Triazine derivative | 1.5 | - | - |
| Organic peroxide | - | 1.0 | 2 |
| MgO | 3 | - | 2 |
| ZnO | - | - | 1 |
| Stearic acid | 0.1 | - | 0.3 |
| TMT | - | - | 0.2 |
| EZ | - | - | 0.4 |
| Vulcanization conditions (°C) x (min) | 180x7 | 170x7 | 150x30 |
| Stress under 300% tension (kg/cm²) | 18 | 20 | 23 |
| Tensile strength (kg/cm²) | 30 | 45 | 45 |
| Elongation (%) | 500 | 500 | 620 |
| Elongation set (%) | 5.2 | 3.9 | 4.0 |
| Firmness (JIS A) | 36 | 37 | 40 |
| (Note) TMT: Tetramethylthiuram disulfide EZ: Zinc diethyldithiocarbamate | | | |

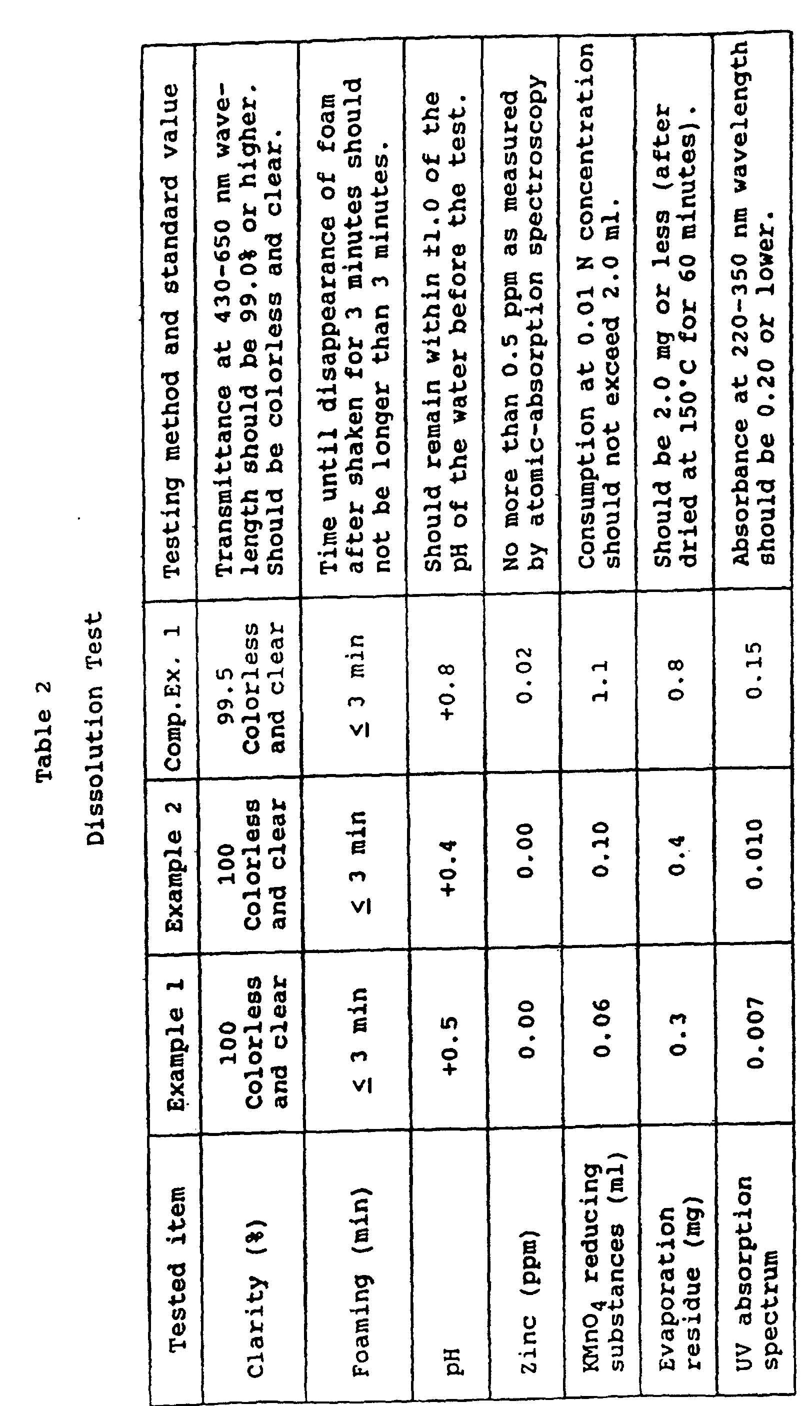

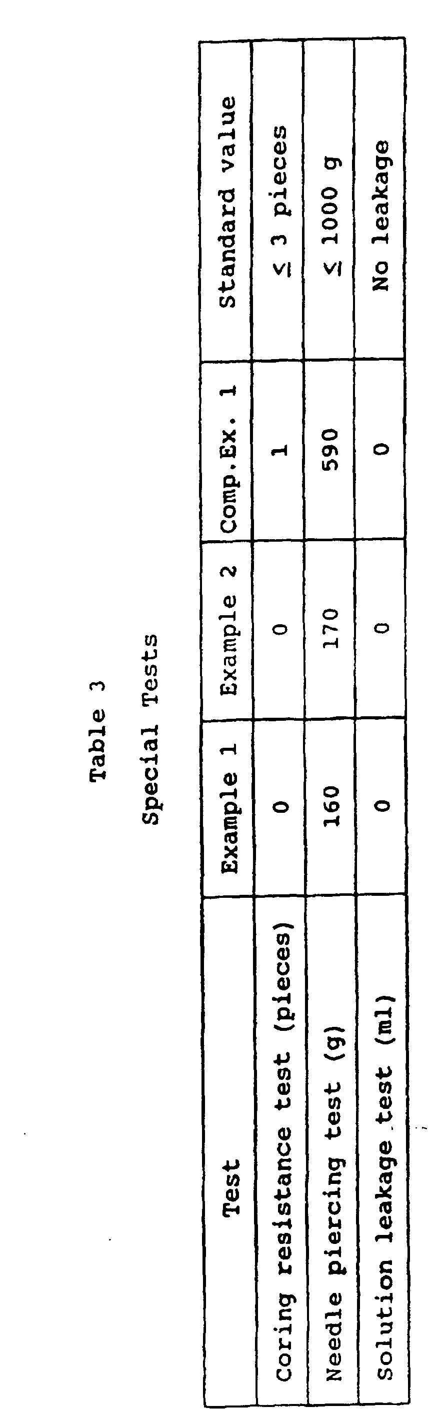

### Examples 3-4 & Comparative Example 2

As shown in Table 4, rubber compounds were prepared with the same formulations as those of Examples 1-2 and Comparative Examples 1, respectively, except that the proportion of the ultra-high-molecular-weight PE was changed to 40 parts and the proportions of the organic peroxide in Exmaple 4 and Comparative Example 2 were reduced from 1.0 part by weight to 0.7 part by weight and from 2 parts by weight to 0 part by weight, respectively. Using these rubber compounds, rubber stoppers for syringe plungers were produced by compression molding (under the same vulcanization conditions as in Examples 1-2 and Comparative Example 1). None of the rubber stoppers had surface tackiness.

Strength characteristics were measured as in Example 1. The results are presented in Table 4.

Further, a dissolution test was conducted on the respective rubber stoppers for the plungers. Substantially the same results as the results described in Table 1 were obtained.

**Table 4**

| Formulation | Example 3 | Example 4 | Comp. Ex. 2 |
|---|---|---|---|
| Halogenated butyl rubber | 100 | 100 | 100 |
| Ultra-high-molecular-weight PE | 40 | 40 | 40 |
| Silica | 7.5 | 7.5 | 7.5 |
| Triazine derivative | 1.5 | - | - |
| Organic peroxide | - | 0.7 | - |
| MgO | 3 | - | 2 |
| ZnO | - | - | 1 |
| Stearic acid | 0.1 | - | 0.3 |
| TMT | - | - | 0.2 |
| EZ | - | - | 0.4 |
| Vulcanization conditions (°C) x (min) | 180x7 | 170x7 | 150x30 |
| Stress under 300% tension (kg/cm²) | 26 | 45 | 46 |
| Tensile strength (kg/cm²) | 70 | 130 | 125 |
| Elongation (%) | 600 | 450 | 500 |
| Elongation set (%) | 6.5 | 3.5 | 5.4 |
| Firmness (JIS A) | 53 | 56 | 54 |

## Claims

1. A molded rubber part suitable for use in contact with a medical solution, wherein said molded rubber is obtainable by molding and vulcanizing a halogenated butyl rubber, which contains fine powder of ultra-high-molecular-weight polyethylene added therein in a proportion of from 5 to 70 parts by weight per 100 parts by weight of said halogenated butyl rubber, in the absence of any zinc compound while using at least one 2-substituted-4,6-dithiol-s-triazine derivative or an organic peroxide.

2. The molded rubber part of claim 1, which is a rubber closure for a drug container.

3. The molded rubber part of claim 2, wherein said fine powder of said ultra-high-molecular-weight polyethylene is used in a proportion of 5 to 25 parts by weight per 100 parts by weight of said halogenated butyl rubber.

4. The molded rubber part of claim 1, which is a rubber stopper for a drug injector.

5. The molded rubber part of claim 4, wherein said fine powder of said ultra-high-molecular-weight polyethylene is used in a proportion of 20 to 70 parts by weight per 100 parts by weight of said halogenated butyl rubber.

6. The molded rubber part of claim 1, wherein said fine powder of said ultra-high-molecular-weight polyethylene has a particle size small enough to pass through a 100-mesh sieve.

7. The molded rubber part of claim 1, wherein said 2-substituted-4,6-dithiol-s-triazine derivative is at least one derivative selected from 2,4,6-trithiol-s-triazine (trithiocyanuric acid), 2-butylamino-4,6-dithiol-s-triazine, 2-ethylamino-4,6-dithiol-s-triazine dioctylamine or 2-butyl-4,6-dithiol-s-triazine ditriethyl ammonium.

8. The molded rubber part of claim 1, wherein said triazine derivative is used in an amount of from 1 to 10 parts by weight per 100 parts by weight of said halogenated butyl rubber.

9. The molded rubber part of claim 1, wherein said organic peroxide is at least one peroxide selected from 1,3-(t-butylperoxyisopropyl)benzene, 2,5-dimethyl-2,5-di(t-butylperoxy)hexane, 2,5-dimethyl-2,5-di(t-butylperoxy)hexane-3,1,1-di(t-butylperoxy-3,3,5-trimethylcyclohexane, diisobutyl peroxide or n-butyl 4,4-bis(5-butylperoxy) valerate.

10. The molded rubber part of claim 1, wherein said organic peroxide is used in a range of from 0.1 to 5 parts by weight per 100 parts by weight of said halogenated butyl rubber.

11. Use of the molded rubber part according to any one of claims 1 to 10 as a rubber closure for a drug container or as a rubber stopper for a drug injector.

12. A process for the preparation of a molded rubber part according to any one of claims 1 to 10, which comprises the steps of molding and vulcanizing a halogenated butyl rubber, which contains fine powder of ultra-high-molecular-weight polyethylene added therein in a proportion of from 5 to 70 parts by weight per 100 parts by weight of said halogenated butyl rubber, in the absence of any zinc compound while using at least one 2-substituted-4,6-dithiol-s-triazine derivative or an organic peroxide.

## Patentansprüche

1. Gummiformkörper, der zur Verwendung in Kontakt mit einer medizinischen Lösung geeignet ist, wobei der Gummiformkörper erhältlich ist durch Formen und Vulkanisieren eines halogenierten Butylgummis, der ein in einem Anteil von 5 bis 70 Gewichtsteilen pro 100 Gewichtsteilen des halogenierten Butylgummis zugefügtes feines Pulver von ultrahochmolekularem Polyethylen enthält, in Abwesenheit jeglicher Zinkverbindung, jedoch unter Verwendung von mindestens einem 2-substituierten 4,6-Dithiol-s-triazin-Derivat oder einem organischen Peroxid.

2. Der Gummiformkörper gemäß Anspruch 1, der ein Gummiverschluss für ein Arzneimittelbehältnis ist.

3. Der Gummiformkörper gemäß Anspruch 2, wobei das feine Pulver des ultrahochmolekularen Polyethylens in einer Menge von 5 bis 25 Gewichtsteilen pro 100 Gewichtsteilen des halogenierten Butylgummis verwendet wird.

4. Der Gummiformkörper gemäß Anspruch 1, der ein Gummiverschlussstück für einen Arzneimittelinjektor ist.

5. Der Gummiformkörper gemäß Anspruch 4, wobei das feine Pulver des ultrahochmolekularen Polyethylens in einer Menge von 20 bis 70 Gewichtsteilen pro 100 Gewichtsteilen des halogenierten Butylgummis verwendet wird.

6. Der Gummiformkörper gemäß Anspruch 1, wobei das feine Pulver des ultrahochmolekularem Polyethylens eine Partikelgröße aufweist, die klein genug ist, um ein Sieb der Siebnummer 100 (100-mesh) zu passieren.

7. Der Gummiformkörper gemäß Anspruch 1, wobei das 2-substituierte 4,6-Dithiol-s-triazin-Derivat mindestens ein Derivat ist ausgewählt aus 2,4,6-Trithiol-s-triazin (Trithiocyanursäure), 2-Butylamino-4,6-dithiol-s-triazin, 2-Ethylamino-4,6-dithiol-s-triazin·Dioctylamin oder 2-Butyl-4,6-dithiol-s-triazin·Ditriethylammonium.

8. Der Gummiformkörper gemäß Anspruch 1, wobei das Triazin-Derivat in einer Menge von 1 bis 10 Gewichtsteilen pro 100 Gewichtsteilen des halogenierten Butylgummis verwendet wird.

9. Der Gummiformkörper gemäß Anspruch 1, wobei das organische Peroxid mindestens ein Peroxid ausgewählt aus 1,3-(t-butylperoxyisopropyl)benzol, 2,5-Dimethyl-2,5-di(tbutylperoxy)hexan, 2,5-Dimethyl-2,5-di(t-butylperoxy)hexan-3,1,1-di(t-butylperoxy)-3,3,5-trimethylcyclohexan, Diisobutylperoxid und n-Butyl-4,4-bis(5-butylperoxy)valerat ist.

10. Der Gummiformkörper gemäß Anspruch 1, wobei das organische Peroxid in einem Bereich von 0.1 bis 5 Gewichtsteilen pro 100 Gewichtsteilen des halogenierten Butylgummis verwendet wird.

11. Vewendung des Gummiformkörpers gemäß einem der Ansprüche 1 bis 10 als Gummiverschluss für ein Arzneimittelbehältnis oder als Gummiverschlussstück für einen Arzneimittelinjektor.

12. Verfahren zur Herstellung eines Gummiformkörpers gemäß einem der Ansprüche 1 bis 10, umfassend die Schritte Formen und Vulkanisieren eines halogenierten Butylgummis, der ein in einem Anteil von 5 bis 70 Gewichtsteilen pro 100 Gewichtsteilen des halogenierten Butylgummis zugefügtes feines Pulver von ultrahochmolekularem Polyethylen enthält, in Abwesenheit jeglicher Zinkverbindung, jedoch unter Verwendung von mindestens einem 2-substituierten-4,6-Dithiol-s-triazin-Derivat oder einem organischen Peroxid.

## Revendications

1. Partie de caoutchouc moulé pour une utilisation en contact avec une solution médicinale, dans laquelle le caoutchouc moulé peut être obtenu par moulage et vulcanisation d'un caoutchouc butyle halogéné, lequel contient une poudre fine de polyéthylène d'un poids moléculaire ultra élevé ajoutée à celui-ci dans une proportion de 5 à 70 parties en poids pour 100 parties en poids dudit caoutchouc butyle halogéné, en l'absence de tout composé à base de zinc tout en utilisant au moins un dérivé de 4,6-dithiol-s-triazine substitué en position 2 ou un peroxyde organique.

2. Partie de caoutchouc moulé selon la revendication 1, laquelle est une fermeture en caoutchouc pour un récipient pour médicament.

3. Partie de caoutchouc moulé selon la revendication 2, dans laquelle ladite poudre fine dudit polyéthylène d'un poids moléculaire ultra élevé est utilisée dans une proportion de 5 à 25 parties en poids pour 100 parties en poids dudit caoutchouc butyle halogéné.

4. Partie de caoutchouc moulé selon la revendication 1, laquelle est un bouchon en caoutchouc pour un injecteur de médicament.

5. Partie de caoutchouc moulé selon la revendication 4, dans laquelle ladite poudre fine dudit polyéthylène d'un poids moléculaire ultra élevé est utilisée dans une proportion de 20 à 70 parties en poids pour 100 parties en poids dudit caoutchouc butyle halogéné.

6. Partie de caoutchouc moulé selon la revendication 1, dans laquelle ladite poudre fine dudit polyéthylène d'un poids moléculaire ultra élevé a une dimension de particule suffisamment faible pour passer à travers un tamis de 100 mesh.

7. Partie de caoutchouc moulé selon la revendication 1, dans laquelle ledit dérivé de 4,6-dithiol-s-triazine substitué en position 2 est au moins un dérivé choisi parmi la 2,4,6-trithiol-s-triazine (acide trithiocyanurique), la 2-butylamino-4,6-dithiol-s-triazine, la 2-éthylamino-4,6-dithiol-s-triazine· dioctylamine ou la 2-butyl-4,6-dithiol-s-triazine· ditriéthylammonium.

8. Partie de caoutchouc moulé selon la revendication 1, dans laquelle ledit dérivé de triazine est utilisé dans une quantité de 1 à 10 parties en poids pour 100 parties en poids dudit caoutchouc butyle halogéné.

9. Partie de caoutchouc moulé selon la revendication 1, dans laquelle ledit peroxyde organique est au moins un peroxyde choisi parmi le 1,3-(*t*-butylperoxyisopropyl)benzène, le 2,5-diméthyl-2,5-di(*t*-butylperoxy)hexane, le 2,5-diméthyl-2,5-di(*t*-butylperoxy)hexane-3,1,1-di(*t*-butylperoxy)-3,3,5-triméthylcyclohexane, le peroxyde de diisobutyle ou le 4,4-bis(5-butylperoxy)valérate de n-butyle.

10. Partie de caoutchouc moulé selon la revendication 1, dans laquelle ledit peroxyde organique est utilisé dans une plage allant de 0,1 à 5 parties en poids pour 100 parties en poids dudit caoutchouc butyle halogéné.

11. Utilisation de la partie de caoutchouc moulé selon l'une quelconque des revendications 1 à 10, en tant que fermeture en caoutchouc pour un récipient pour médicament ou bouchon en caoutchouc pour un injecteur de médicament.

12. Procédé de préparation d'une partie de caoutchouc moulé selon l'une quelconque des revendications 1 à 10, lequel comprend des étapes de moulage et de vulcanisation d'un caoutchouc butyle halogéné, lequel contient une poudre fine de polyéthylène d'un poids moléculaire ultra élevé ajoutée à celui-ci dans une proportion de 5 à 70 parties en poids pour 100 parties en poids dudit caoutchouc butyle - halogéné, en l'absence de tout composé à base de zinc tout en utilisant au moins un dérivé de 4,6-dithiol-s-triazine substitué en position 2 ou un peroxyde organique.
